# NEUE EUROPÄISCHE PATENTSCHRIFT

(11) **EP 0 620 528 B2**
(45) Veröffentlichungstag und Bekanntmachung des Hinweises auf die Entscheidung über den Einspruch: **31.10.2001**
(45) Hinweis auf die Patenterteilung: 02.07.1997
(21) Anmeldenummer: 94105359.7
(22) Anmeldetag: 07.04.1994
(51) Int. Cl.: G06F 17/00, B65G 1/137

(54) **Verfahren zur Lagerung von Stückgut und Vorrichtung zur Durchführung des Verfahrens**
Method for storing parcels and apparatus for carrying out this method
Procédé pour le stockage de colis et dispositif pour la mise en oeuvre de ce procédé

(30) Priorität: 10.04.1993 DE 4311866; 02.06.1993 DE 4318341
(43) Veröffentlichungstag der Anmeldung: 19.10.1994
(73) Patentinhaber: Schausten, Christoph, D-66709 Weiskirchen/Saar (DE)
(72) Erfinder: Schausten, Christoph, D-66709 Weiskirchen/Saar (DE)
(74) Vertreter: Jackisch-Kohl, Anna-Katharina

(56) Entgegenhaltungen:
- EP-A- 0 349 433
- EP-A- 0 525 851
- DE-A- 4 026 449
- DE-U- 8 905 526
- US-A- 4 692 876
- IBM TECHNICAL DISCLOSURE BULLETIN. Bd. 28, Nr. 1 , Juni 1985 , ARMONK US Seiten 180 - 183 'Automated Parts Handling System'
- Graf, Bernhard: Flexibilität und Kapazität von Werkstückspeichersystemen, Springer-Verlag, 1984, S. 54-59

## Beschreibung

Die Erfindung betrifft ein Verfahren zur Lagerung von Stückgut an einer Lagerstelle in einem Lager nach dem Oberbegriff des Anspruches 1.

Insbesondere im Apothekenbereich ist es üblich, die verschiedenen Packungen in Schubladen abzulegen. Als Ordnungsmerkmal dient hierbei in der Regel der Produktname. Dies hat aber den Nachteil, daß die zur Verfügung stehenden Schubladenflächen nicht optimal zur Lagerung der Arzneiartikel ausgenutzt werden. Dadurch wird in einer Apotheke erheblicher Raum zur Lagerung der Arzneimittel benötigt.

Bei einem bekannten Verfahren (DE-A1-40 26 449) werden Stückgüter auf einer Palette gelagert, auf der sie zum eigentlichen Endlager transportiert werden. Wie die auf der Palette gelagerten Stückgüter in das Endlager eingebracht und ihm entnommen werden, ist nicht beschrieben. Wesentlich für dieses bekannte Verfahren ist ein Zwischenspeicher, auf dem die vermessenen und identifizierten Stückgüter in beliebiger Reihenfolge positioniert werden. Damit die Palette optimal beladen werden kann, müssen jedoch die Form und die Abmessung einer größeren Zahl von Stückgütern, etwa 30 %, bekannt sein. Erst aufgrund dieser Vorkenntnis einer bestimmten Zahl von Stückgütern kann die Palette so beladen werden, daß sie optimal befüllt werden kann. Die Zwischenschaltung des Zwischenspeichers verteuert die verwendete Vorrichtung und erhöht die Einlagerungszeiten.

Die Stückgüter werden so auf der Palette zusammengestellt, daß das im Zwischenspeicher befindliche Stückgut mit der größten Grundfläche oder die Stückgüter gleicher Höhe, die zusammen die größte Grundfläche einnehmen, in einer Ecke der Palette angeordnet werden. Die Stückgüter abweichender, jedoch gleicher Höhe werden dann in der gegenüberliegenden Ecke der Palette angeordnet. Bei der weiteren Befüllung der Palette wird so vorgegangen, daß die Stückgüter so gestapelt werden, daß sich immer möglichst große, zusammenhängende, ebene horizontale Flächen ergeben. Bei diesem bekannten Verfahren wird somit davon ausgegangen, möglichst in ihrer Form gleiche oder gleichartige Stückgüter zusammenzusetzen, um die Forderung hinsichtlich der zusammenhängenden, ebenen horizontalen Flächen zu erreichen.

Es ist auch bekannt (DE-A1-42 33 688), Stückgüter auf als Tröge ausgebildeten Lagergutträgern zu lagern und dieses auf Stützschienen abzustützen. Auch bei diesem Verfahren werden Lagerhilfsmittel in Form der Lagergutträger eingesetzt. Die Breite des Stückgutes ist jeweils kleiner als der Abstand zwischen zwei auf gleicher Höhe liegenden Stützschienen eines Stützschienenpaares. Die Höhe der Stückgüter kann größer sein als der Abstand übereinander liegender Stützschienenpaare.

Es ist schließlich bekannt (FR-A1-2 581 044), untereinander gleich ausgebildete Blutkonservenbeutel während des Transportes zu identifizieren.

Der Erfindung liegt die Aufgabe zugrunde, ein Verfahren zur Lagerung von Stückgütern so auszubilden, daß sie innerhalb kürzester Zeit so gelagert werden können, daß der vorhandene Lagerraum optimal genutzt wird und dennoch eine einfache Entnahme des Stückgutes aus dem Lager möglich ist.

Diese Aufgabe wird erfindungsgemäß mit den Merkmalen des Anspruches 1 gelöst.

Beim erfindungsgemäßen Verfahren werden die vermessenen und identifizierten Stückgüter direkt, also ohne Zwischenlagerung in einem Zwischenspeicher und ohne Verwendung von Lagerhilfsmitteln, in das Regal bzw. in das Schubladenlager eingelagert. Als Meßgröße zur Auswahl der geeigneten Lagerstelle werden die Abmessungen des Stückgutes verwendet. Anhand der Vermessung des Stückgutes wird unter Berücksichtigung des freien Lagerplatzes im Lager berechnet, in welcher Lage das Stückgut an der Lagerstelle abgelegt werden kann, um eine optimale Raumausnutzung zu ermöglichen. Beim erfindungsgemäßen Verfahren ist die Kenntnis einer größeren Zahl von Stückgütern hinsichtlich Form und Abmessungen vor dem Einlagerungsvorgang nicht notwendig. Die Stückgüter werden vielmehr in der Reihenfolge, in der sie anfallen, vermessen, identifiziert und zur jeweiligen Lagerstelle gebracht. Bei dieser chaotischen Lagerung werden nicht etwa gleich große Stückgüter möglichst zusammengestellt und abgelegt, sondern es können wahllos unterschiedliche Stückgutgrößen nebeneinander angeordnet werden. Es ist dadurch ohne weiteres möglich, daß im Lager neben einem großen Stückgut ein hinsichtlich seiner Abmessungen völlig anders gestaltetes, insbesondere kleineres Stückgut gelagert wird. Die jeweiligen Lagerstellen der Stückgüter werden mit dem Rechner erfaßt, so daß mühelos das gewünschte Stückgut dem Lager entnommen werden kann. Es hat sich gezeigt, daß sich bei Einsatz des erfindungsgemäßen Verfahrens eine Lagerplatzersparnis von wenigstens 50 % erreichen läßt. Beim erfindungsgemäßen Verfahren handelt es sich nicht nur um eine Platzoptimierung, sondern um die komplette Erfüllung der logistischen Aufgabe, angeliefertes Stückgut optimal in dem dafür vorhandenen Lagerraum unterzubringen und auch wieder auszugeben.

Die Abgabe der Stückgüter kann manuell oder vorteilhaft durch ein Handhabungsgerät erfolgen. Bei der manuellen Ablage kann der Rechner beispielsweise über einen an eine Schnittstelle angeschlossenen Drucker eine Abgabeliste ausdrucken, anhand der das Personal die Stückgüter zum Beispiel in Verbindung mit einem optischen Koordinatensystem an den Lagerstellen einräumen kann. Die jeweils zu verwendende Lagerstelle kann dabei vorteilhaft von außen gekennzeichnet sein, beispielsweise mittels eines rechnergesteuerten optischen Zeigers. Bei Verwendung eines Handhabungsgerätes erhält dieses vorteilhaft ein entsprechendes Signal vom Rechner, nimmt das vermessene Stückgut auf und legt es in der richtigen Lage an der richtigen Lagerstelle ab.

Das Stückgut wird beim erfindungsgemäßen Verfahren nicht mehr alphabetisch nach Produktnamen im Lager abgelegt, sondern ausschließlich im Hinblick auf seine Stückgutgröße, so daß der zur Verfügung stehende Lagerraum optimal ausgenutzt werden kann.

Vorteilhaft wird das Stückgut mittels des Handhabungsgerätes in das Lager gebracht und dort abgelegt. Soll das Stückgut dem Endlager entnommen werden, wird es mit dem Handhabungsgerät erfaßt und einer Abgabeeinheit übergeben. Sie kann eine Transportvorrichtung für das Stückgut sein, aber auch ein Ablagetisch und dergleichen.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1 A und Fig. 1B: in schematischer Darstellung den Verfahrensablauf zum Einlagem von Stückgut in ein Lager,
- Fig. 2A bis Fig. 2C: in schematischer Darstellung das Ordnungsprinzip des Stückgutes im Lager,
- Fig. 3: im Schnitt und in schematischer Darstellung ein vor einem Lager angeordnetes Handhabungsgerät,
- Fig. 4: in schematischer Darstellung eine Abgabeeinheit, mit der Stückgut von einer Transporteinheit zu einer Abnahmestelle transportierbar ist.

Mit dem im folgenden beschriebenen Verfahren ist es möglich, Stückgut so in einem Lager unterzubringen, daß der zur Verfügung stehende Lagerraum optimal genutzt wird. Im Ausführungsbeispiel wird dieses Verfahren anhand des Stückgutumsatzes in einer Apotheke im einzelnen beschrieben. Dieses Verfahren kann aber selbstverständlich überall dort eingesetzt werden, wo Stückgut gelagert und entnommen wird.

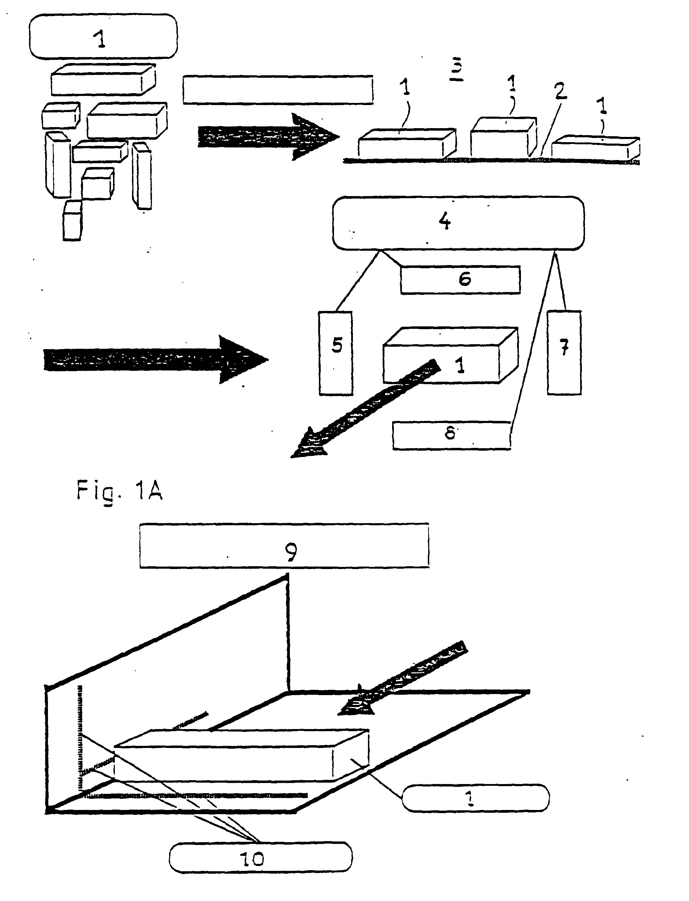

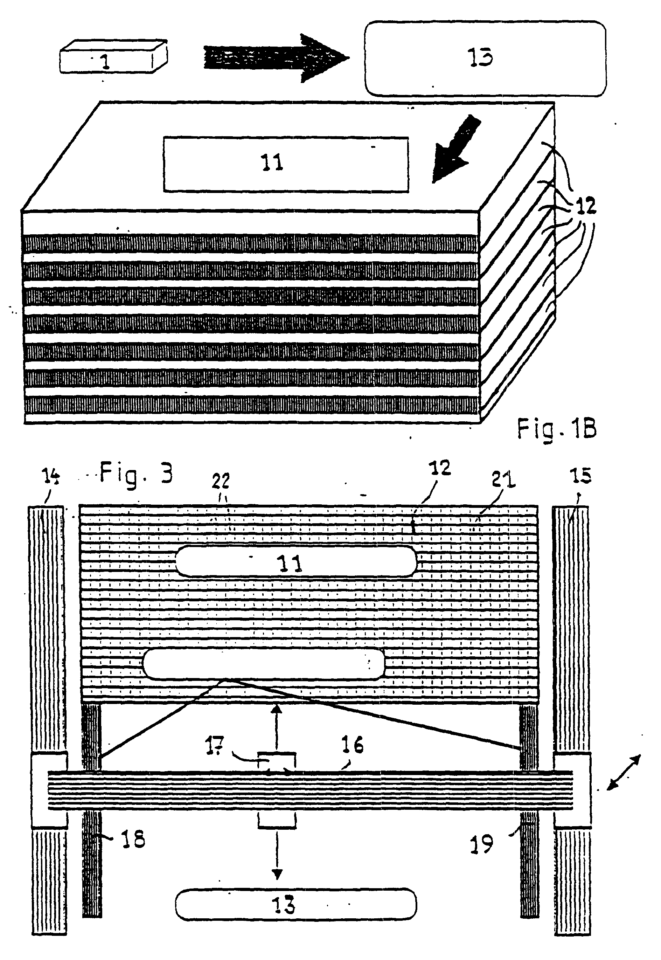

Anhand der Fig. 1A und 1 B wird das Verfahren näher erläutert. Wird das Stückgut in Gebinden, wie Kartons und dgl., angeliefert, dann werden die Einzelpackungen diesen Gebinden entnommen und lose auf eine Transporteinrichtung 2 einer Vereinzelungseinheit 3 geschüttet. Eine Vorsortierung der einzelnen Packungen beispielsweise hinsichtlich ihrer Größe ist nicht erforderlich. In der Vereinzelungseinheit 3 wird das einzelne Stückgut, beispielsweise Pakkungen, in bekannter Weise vereinzelt. Beispielsweise kann diese Vereinzelung durch Vibrationsförderung erfolgen. Das Stückgut 1 wird dann hintereinander einer Erfassungseinrichtung 4 zugeführt, in der Leseeinrichtungen 5 bis 8, beispielsweise Scanner, vorgesehen sind. Mit diesen Leseeinrichtungen 5 bis 8 kann ein am Stückgut 1 vorgesehener Barcode gelesen werden. Bei quaderförmigen Packungen 1 befinden sich diese Barcodes üblicherweise an den Schmalseiten, am Boden oder im Deckel. Darum sind die Leseeinrichtungen 5 bis 8 vorteilhaft so angeordnet, daß sie diese vier Seiten des Stückgutes 1 erfassen können. Die Leseeinrichtungen 5 bis 8 bzw. die Erfassungseinrichtung 4 sind an eine (nicht dargestellte) Rechnereinheit angeschlossen, in der eine Datenbank installiert ist, in welcher sämtliche verfügbaren Präparate mit ihrer zugehörigen Pharmazentralnummer (Barcode) abgelegt sind.

Die Erfassungseinrichtung 4 ist vorteilhaft nahe dem Ende der Transporteinrichtung 2 der Vereinzelungseinheit 3 angeordnet. Damit die Leseeinrichtungen 5 bis 8 die entsprechenden Seiten der Packung 1 erfassen können, ist die Transporteinrichtung 2 in diesem Bereich nach unten und nach außen durch eine durchsichtige Fläche, beispielsweise eine Glasplatte, unterbrochen. Sobald das Stückgut 1 in diesen durchsichtigen Bereich der Transporteinrichtung 2 gelangt, können die Leseeinrichtungen 5 bis 8 die entsprechenden Seiten des Stückgutes 1 erfassen und einen dort vorhandenen Barcode lesen. Anhand dieses Barcodes oder auch durch OCR-Lesung wird die jeweilige Packung 1 identifiziert. Diese Identifizierung kann während des Transports oder auch am Ende des Transports erfolgen.

Sollte die Packung 1 eine ungünstige Lage in bezug auf die Leseeinrichtungen 5 bis 8 aufweisen, so daß der Barcode nicht erfaßt wird, dann erhält der Rechner ein entsprechendes Signal. Dadurch schaltet der Rechner seinerseits eine (nicht dargestellte) Aussortiereinrichtung ein, mit der das nicht identifizierbare Stückgut 1 von der Transporteinrichtung 2 zurück zum Beginn der Transporteinrichtung befördert wird. Eine solche Aussortiereinrichtung kann beispielsweise eine mechanisch arbeitende Abweisklappe sein, die sich im Transportweg des Stückgutes befindet und in dessen Transportweg geschaltet wird, durch welche das Stückgut aus der Transportbahn gelenkt wird. Die Klappe kann aber auch im Boden der Transportbahn vorgesehen sein und wegklappen, sobald sich das Stückgut auf ihr oder kurz vor ihr befindet. Es fällt dann beispielsweise auf eine darunter befindliche Rückführeinrichtung, mit der dieses Stückgut zum Anfang der Transporteinrichtung 2 zurückgefordert wird. Von dort gelangt es erneut auf die Transporteinrichtung 2. Es ist dann davon auszugehen, daß das Stückgut 1 nunmehr in eine solche Lage auf der Transporteinrichtung 2 gelangt, daß der Barcode von den Leseeinrichtungen 5 bis 8 erfaßt werden kann. Gegebenenfalls muß dieses Stückgut 1 erneut zum Anfang der Transporteinrichtung 2 zurückgefördert werden.

Das nicht lesbare Stückgut 1 kann beispielsweise auch durch Preßluft, die beispielsweise von unten durch die Transporteinrichtung 2 auf das Stückgut 1 wirkt, von der Transportbahn weggeblasen und auf eine Rückführeinrichtung oder dergleichen gefördert werden.

Nachdem mittels der Leseeinrichtungen 5 bis 8 das Stückgut 1 identifiziert worden ist, gelangt es beim weiteren Transport zu einer Vermessungseinrichtung 9, mit der das jeweilige Stückgut in seinen Außenabmessungen vermessen wird. Die Vermessung kann elektrisch, elektronisch, mechanisch, mit Ultraschall und dgl. erfolgen. Im dargestellten Ausführungsbeispiel hat die Vermessungseinrichtung 9 optische Meßgeräte 10, die Lichtschranken, Sensoren, Kameras, Ultraschall oder dgl. sein oder mechanisch arbeiten können. Im Ausführungsbeispiel ist die Vermessungseinrichtung 9 mit drei CCD-Zeilenkameras ausgestattet, mit denen das Stückgut 1 in seinen drei Koordinaten erfaßt werden kann. Diese drei Kameras 10 sind in Fig. 1 A symbolisch durch die drei Raumkoordinaten angedeutet. Die drei Kameras 10 sind an den Rechner angeschlossen und übermitteln die entsprechenden Meßwerte der Packung 1. Anhand der drei Abmessungen des Stückgutes 1 kann der Rechner das Volumen des Stückgutes 1 bzw. die Lagerfläche des Stückgutes berechnen. So läßt sich die geeignetste Fläche im Hinblick auf die Optimierung des Gesamtlagers berechnen, auf die das Stückgut 1 in der Lagerstellung gelegt werden kann.

Im Rechner ist der verfügbare Lagerraum (z.B. Schubladenfläche x Nutzhöhe) eines Lagers 11 (Fig. 1B) gespeichert. Dieses Lager 11 ist beispielsweise ein Schubladenlager, wie es in Apotheken häufig eingesetzt wird. In den einzelnen Schubladen 12 wird das jeweilige Stückgut gelagert. Anhand der von der Vermessungseinrichtung 9 an den Rechner gelieferten Maßangaben überprüft der Rechner, an welcher Lagerstelle das gemessene Stückgut unter optimaler Raumausnutzung untergebracht werden kann. Das Stückgut 1 wird dann in noch zu beschreibender Weise an diese Lagerstelle gebracht. Der Rechner erhält dann ein entsprechendes Signal, daß diese Lagerstelle nunmehr besetzt ist. Zudem ist infolge der Erfassungseinrichtung 4 der Rechner auch darüber informiert, welches Produkt sich an dieser Lagerstelle befindet. Wird darum dieses Produkt später vom Apotheker angefordert, kann es von einem entsprechenden Handhabungsgerät dem Lager 11 entnommen werden. Dabei erhält der Rechner wiederum ein Signal, daß diese Lagerstelle wieder frei ist. Außerdem wird der Rechner dann auch darüber informiert, daß ein bestimmtes Präparat entnommen worden ist. Auf diese Weise ist auch jederzeit eine kontinuierliche Bestandsführung der Präparate gewährleistet. Das entsprechende Programm des Rechners ist vorteilhaft so ausgebildet, daß beispielsweise bei einem vorgegebenen Minimalbestand des jeweiligen Präparates automatisch ein Bestellformular ausgedruckt wird, das vom Apotheker nur noch abzuzeichnen ist. Auf diese Weise ist sichergestellt, daß die Präparate stets in der Apotheke vorrätig sind.

Das Lager 11 ist vorteilhaft CNC-gesteuert. Hierzu ist das Lager 11 an den Rechner angeschlossen. Mit ihm wird die jeweilige Schublade 12 ausgefahren, in der sich die für das Stückgut 1 vorgesehene freie Lagerstelle befindet.

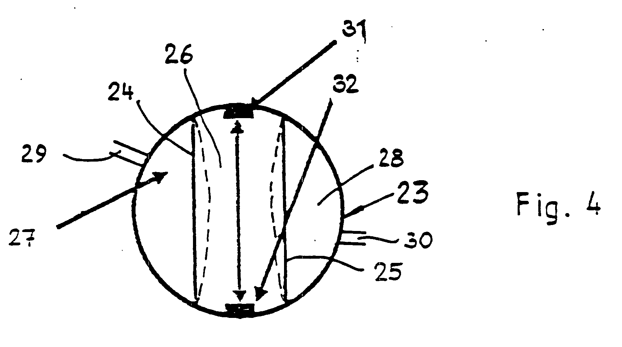

Als Lager 11 kann ein überdimensionaler Schubladenschrank verwendet werden, dessen Schubladen 12 beispielsweise mittels Teleskopstangen ein- und ausgefahren werden. Als Antriebe für die Schubladen 12 können Zahnstangentriebe, Pneumatik- oder Hydraulikantriebe und dergleichen eingesetzt werden, die jeweils über den Rechner gesteuert betätigt werden. Dadurch ist ein vollautomatisches Be- und Entladen der Schubladen möglich. Zum Be- und Entladen des Lagers 11 ist ein Handhabungsgerät 13 vorgesehen, das vorzugsweise ein n-achsiger Roboter ist. Ein solcher Roboter kann ein Portalroboter oder ein herkömmlicher Roboter mit mehreren Bewegungsachsen sein. In Fig. 3 ist ein bevorzugtes Ausführungsbeispiel eines Handhabungsgerätes in Form eines Portalroboters dargestellt. Er nimmt nur wenig Platz in Anspruch und hat kurze Zugriffszeiten. Der Portalroboter 13 hat zwei im Bereich neben dem Lager 11 angeordnete Führungsschienen 14 und 15, auf denen ein Querträger 16 verfahrbar ist. Er erstreckt sich zwischen den beiden Führungsschienen 14 und 15 und liegt im Bereich oberhalb des Regals 11. Auf den Führungsschienen 14, 15 kann der Querträger 16 in Verschieberichtung der Schubladen 12 verfahren werden.

Längs des Querträgers 16 ist ein senkrecht zu ihm sich erstreckender Vertikalträger 17 verfahrbar, längs dem in Höhenrichtung eine (nicht dargestellte) Greifeinrichtung verfahrbar ist. Mit ihr kann das Stückgut der jeweiligen Schublade 12 entnommen bzw. in der Schublade abgelegt werden. Der Portalroboter 13 ist an den Rechner angeschlossen und wird durch ihn so gesteuert, daß die Greifeinrichtung die jeweilige Lagerstelle anfährt.

Die Schublade 12 des Lagers 11 ist längs Führungsschienen 18 und 19 mit den beschriebenen Antrieben verfahrbar. Über den Rechner wird die jeweils ein- bzw. auszufahrende Schublade 12 angesteuert und bevorzugt nur so weit ausgefahren, bis die jeweilige Lagerstelle im Griffbereich der Greifeinrichtung des Portalroboters 13 liegt. Befindet sich diese Lagerstelle in der Nähe der Blende der Schublade 12, dann muß sie nur wenig aus dem Lager 11 ausgefahren werden, wodurch erheblich Zeit eingespart wird.

Die Transporteinrichtung 2, auf der die Stückgüter 1 nacheinander durch die Vereinzelungseinheit 3, die Erfassungseinrichtung 4 und die Vermessungseinrichtung 9 transportiert werden, erstreckt sich so weit, daß die Stückgüter von der Greifeinrichtung des Portalroboters 13 ergriffen werden können.

Anstelle der beschriebenen Schubladen kann das Lager 11 auch jede andere geeignete Ablage aufweisen. Beispielsweise können Ablagen eingesetzt werden, die um eine vertikale Achse dreh- oder schwenkbar sind.

Aufgrund der Vermessung des Stückgutes 1 in der Vermessungseinrichtung 9 ist die örtliche Lage und die dreidimensionale Größe des Stückgutes 1 relativ zur Transportrichtung bekannt. Die Datenbank des Rechners stellt nunmehr eine Zuordnung zwischen der Packungsgröße in den ihr eigenen und durch die Vermessung bekannten drei Dimensionen und dem Produkt selbst mit seiner zugehörigen Pharmazentralnummer (Barcode) sowie deren Lage und Position auf der Packung her. Der Rechner erhält entsprechende Signale, aufgrund derer er der Greifeinrichtung des Portalroboters 13 entsprechende Steuersignale übersendet. Die Greifeinrichtung wird dann in bezug auf das zu fassende Stückgut 1 eingestellt. So wird bei einer entsprechend großen Packung die Öffnungsweite der Greiffinger entsprechend groß eingestellt. Auch der Greifdruck kann variiert werden, je nachdem, ob das Stückgut weich oder hart ist. Wenn darum die Greifeinrichtung des Portalroboters 13 an das Stückgut 1 herangefahren ist, nimmt die Greifeinrichtung bereits die zum Fassen des Stückgutes 1 erforderliche Lage ein, so daß es mühelos erfaßt werden kann.

Je nach den beiden Meßergebnissen wird somit die geometrische Position des Stückgutes 1 berechnet, die Lagerfläche und Lagerseite festgestellt, die Griffseite und Griffposition für die Greifeinrichtung bestimmt und die jeweilige Schublade 12 sowie die Lagekoordinaten in der Schublade berechnet.

Am Ende der Transporteinrichtung 2 wird somit das jeweilige Stückgut 1 vom Portalroboter 13 erfaßt und an die vom Rechner bestimmte Lagerstelle in der entsprechenden Schublade 12 lagegerecht abgelegt. Solange die Greifeinrichtung das Stückgut 1 aufnimmt und in Richtung auf das Lager 11 transportiert, wird, vom Rechner gesteuert, bereits die entsprechende Schublade 12 in der erforderlichen Länge ausgefahren, so daß die Greifeinrichtung sofort das Stückgut ablegen kann.

Das Handhabungsgerät 13 kann anstelle einer Greifeinrichtung auch eine Saugeinrichtung aufweisen, mit der das jeweilige Stückgut durch Ansaugen festgehalten wird.

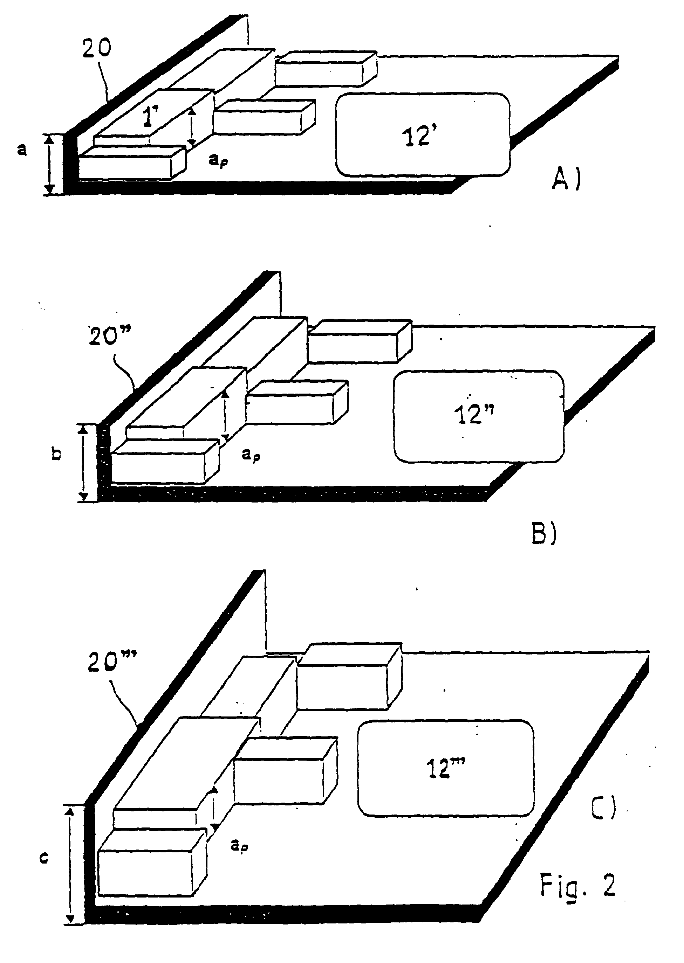

In den Fig. 2A bis 2C wird beispielhaft das Einlagern unterschiedlich großer Stückgüter 1 erläutert. In Fig. 2A ist eine Schublade 12' dargestellt, deren Blende 20 nur eine geringe Höhe a hat. Daraus ergibt sich, daß die Stückgüter 1 in dieser Schublade nur so gelagert werden können, daß ihr in Höhenrichtung der Schublade 12' gemessenes Maß aₚ kleiner als die Höhe a der Blende 20 ist. Der Rechner, dem die Abmessungen der Schublade 12' bekannt sind, ermittelt somit die Position des Stückgutes 1 so, daß es in dieser Schublade 12' gelagert werden kann. So ist erkennbar, daß das Stückgut 1' in der Schublade 12' nur so abgelegt werden kann, daß es mit seiner Breitseite auf der Schubladenfläche liegt. Hochkant kann das Stückgut 1' in dieser Schublade 12' nicht gelagert werden. Dementsprechend sind auch die schematisch in Fig. 2A dargestellten weiteren Stückgüter so abgelegt, daß ihre in vertikaler Richtung gemessenen Maße geringer sind als das Maß a der Blende 20.

Fig. 2B zeigt eine Schublade 12", deren Blende 20" die Höhe b hat, die größer ist als die Höhe a der Blende 20 gemäß Fig. 2A. Dementsprechend können in dieser Schublade 12" größere Stückgüter 1 gelagert werden. Auch sie müssen aber so in der Schublade 12" abgelegt werden, daß ihre in vertikaler Richtung gemessenen Abmessungen aₚ kleiner sind als die Höhe b der Blende 20". Die Greifeinrichtung des Portalroboters 3 wird durch den Rechner wiederum so gesteuert, daß das Stückgut so in der Schublade 2" abgelegt wird, daß es nicht über die Blende 20" übersteht.

Die Schublade 12"' gemäß Fig. 2C schließlich hat die größte Höhe c. Darum können in ihr die größten Stückgüter untergebracht werden. Auch hier müssen die Stückgüter so abgelegt werden, daß ihr in Vertikalrichtung gemessenes Maß aₚ geringer ist als die Höhe c der Blende 20"'.

Wie sich aus den Fig. 2A bis 2C ergibt, werden die Stückgüter nicht alphabetisch oder nach Warengruppen abgelegt, wie dies üblicherweise der Fall ist. Ablageprinzip ist ausschließlich die Packungsgröße bzw. die belegte Lagerfläche des Stückgutes 1. Der Rechner kann aus den Abmessungen der jeweiligen Schubladen die Lagerfläche bzw. das Lagervolumen berechnen und die anfallenden Stückgüter so den einzelnen Schubladen zuordnen, daß eine optimale Flächennutzung mit den Stückgütern gewährleistet ist. Da der Rechner die Art des Produktes, dessen Namen, dessen Größe und auch dessen Lagerstelle in der jeweiligen Schublade kennt, ist gewährleistet, daß der Apotheker jederzeit auf Abruf das erforderliche Präparat in noch zu beschreibender Weise automatisch erhält. Mit der Greifeinrichtung des Portalroboters 13 lassen sich die einzelnen Stückgüter auch einfach an bereits lagemde Packungen bei optimaler Flächennutzung in der jeweiligen Schublade ablegen.

Mit der beschriebenen Vorrichtung und dem beschriebenen Verfahren wird es möglich, auf einer vorgegebenen Grundfläche ein maximales Lagervolumen durch die Übereinanderanordnung möglichst vieler Lagerflächen zu erreichen. Dazu ist es erforderlich, den Abstand zwischen den Lagerstellen zu minimieren. Zu diesem Zweck wird die jeweils kleinste Seitenlänge des Stückgutes 1 als Höhenmaß herangezogen, so daß dementsprechend die jeweils größeren Seitenlängen die Lagerfläche des Stückgutes bilden. Auf diese Weise können die Lagerstellen niedriger Schubladen optimal ausgenutzt werden. Sollten die Lagerstellen der niedrigen Schubladen belegt sein, wird das Stückgut, das an und für sich für eine niedrige Schublade vorgesehen ist, in einer höheren Schublade unter Ausnutzung einer möglicherweise kleineren Lagerstelle abgelegt.

Im folgenden wird beispielhaft eine Flächenbedarfsermittlung für das Lager 11 beschrieben. Hierbei wird davon ausgegangen, daß in einer Apotheke durchschnittlich 8000 Artikel erhältlich sind. Diese Artikel können in Kategorien 1 bis 5 hinsichtlich ihrer Stückzahl in einer Apotheke eingeteilt werden. In die Kategorie 1 fallen Artikel, die der Apotheker beispielsweise 30 mal zur Verfügung hat (30 Einheiten). Durchschnittlich sind dies 0,5 % der angenommenen 8000 Artikel. Hieraus ergibt sich, daß der Apotheker 1200 dieser Artikel (Stückgüter) in der Apotheke zur Verfügung hat. In der Kategorie 2 sind durchschnittlich 15 Einheiten des Artikels vorhanden. Die Kategorie 2 macht durchschnittlich 1 % der 8000 Artikel aus, so daß sich in der Apotheke ebenfalls 1200 Stück dieser Artikel befinden (80 x 15). Die Kategorie 3 umfaßt solche Artikel, die der Apotheker durchschnittlich 5 mal auf Lager hat. Diese Kategorie 3 macht durchschnittlich 2 % der 8000 Artikel aus, woraus sich eine Stückzahl von 800 (160 x 5) ergibt. Die Kategorie 4, zu der solche Artikel zählen, die der Apotheker durchschnittlich nur zweimal auf Lager hat, macht etwa 5 % der Gesamtartikel aus. Somit ergibt sich für die Kategorie 4 eine Stückzahl von 800 (400 x 2). 91,5 % der 8000 Artikel fallen in die Kategorie 5, d.h. der Apotheker hat diese Produkte nur einmal auf Lager. Somit beträgt die Stückzahl der Kategorie 5 7320 (7320 x 1). Berücksichtigt man alle Kategorien 1 bis 5, so ergibt dies eine Artikelzahl von 11320, d.h. der Apotheker muß durchschnittlich diese Stückzahl in seinem Lager unterbringen.

Werden die beiden größeren Seiten einer quaderförmigen Packung (Stückgut) als Lagerflächenseiten herangezogen, dann ergibt sich eine durchschnittliche Flächengröße pro Produkt von 5 cm x 7 cm = 35 cm². Wird hierzu noch beispielsweise jeweils ein 4 mm breiter Zwischenraum zur nächsten Packung als Greifraum hinzugerechnet, ergibt sich eine Fläche von 46 cm². Weiter muß ein durchschnittlicher Flächenverlust bei der Lagerungsoptimierung von beispielsweise 15 % berücksichtigt werden. Daraus ergibt sich eine durchschnittliche Flächengröße von 53 cm². Die 11320 Artikel beanspruchen somit eine Gesamtlagerfläche von 53 cm² x 11320 = 60 m². In einer Apotheke durchschnittlicher Größe muß darum eine solche Lagerfläche von 60 m² zur Verfügung stehen.

Aus diesem Lagerflächenbedarf läßt sich sehr einfach eine Nutzhöhenbedarfsermittlung für das Lager 11 berechnen. Hierbei wird die kleinste Kantenlänge einer Packung 1 als Parameter herangezogen. Bei der folgenden Berechnung wird angenommen, daß die 11320 Stückgüter gleichmäßig in 32 Schubladen 12 mit jeweils einer Grundfläche von 2 m² verteilt eingelagert werden. Die Schubladen 12 sollen in fünf Typen A bis E unterteilt sein, wobei der Schubladentyp A ein Höhenrastermaß von 45 mm, der Schubladentyp B von 60 mm, der Schubladentyp C von 75 mm, der Schubladentyp D von 90 mm und der Schubladentyp E von 110 mm hat. Dieses Höhenrastermaß ergibt sich aus dem Nutzmaß sowie einer Zulage von 30 mm für die Konstruktion der Schublade, den lichten Abstand sowie für ein Vakuumbodensystem in den Schubladen, das unten noch näher erläutert werden soll. Zieht man dieses Zumaß von 30 mm ab, dann steht eine Nutzhöhe bei den Schubladentypen A bis E von 15 mm bis 80 mm zur Verfügung. Die Verpakkungsgrößen in einer Apotheke können sich beispielsweise wie folgt aufteilen:
55 % haben eine kleinste Kantenlänge von 15 mm
20 % haben eine kleinste Kantenlänge von 15 bis 30 mm
15 % haben eine kleinste Kantenlänge von 30 bis 45 mm
8 % haben eine kleinste Kantenlänge von 45 bis 60 mm
2 % haben eine kleinste Kantenlänge von 60 bis 80 mm

Umgerechnet auf eine Gesamtstückzahl von 11320 ergibt sich somit folgende Präparateanzahl:

| | |
|---|---|
| 55 % | 6226 |
| 20 % | 2264 |
| 15 % | 1700 |
| 8 % | 906 |
| 2 % | 227. |

Diejenigen Präparate, die eine kleinste Kantenlänge von bis zu 15 mm haben, lassen sich im Schubladentyp A unterbringen. Entsprechend lassen sich die Präparate mit einer kleinsten Kantenlänge von 15 bis 30 mm im Schubladentyp B, von 30 bis 45 mm im Schubladentyp C, von 45 bis 60 mm im Schubladentyp D und von 60 bis 80 mm im Schubladentyp E unterbringen. Daraus ergibt sich unter Berücksichtigung der durchschnittlichen Flächengröße der Produkte von 53 cm² folgende benötigte Lagerfläche in den verschiedenen Schubladentypen:
Schubladentyp A: 6226 Packungen x 53 cm² = 33 m² Schubladenfläche bei 45 mm Rasterhöhe 17 Schubladen
Schubladentyp B: 2264 Packungen x 53 cm² = 12 m² Schubladenfläche bei 60 mm Rasterhöhe 6 Schubladen
Schubladentyp C: 1700 Packungen x 53 cm² = 9 m² Schubiadenfläche bei 75 mm Rasterhöhe 5 Schubladen
Schubladentyp D: 906 Packungen x 53 cm² = 4,8 m² Schubladenfläche bei 90 mm Rasterhöhe 3 Schubladen
Schubladentyp E: 227 Packungen x 53 cm² = 1,2 m² Schubladenfläche bei 110 mm Rasterhöhe 1 Schublade.

Die Schubladenflächen ergeben somit eine Gesamtfläche von 60 m². Aus der Rasterhöhe und der Schubladenfläche ergibt sich somit ein Nettokonstruktionsvolumen der Schubladen von 3,44 m³.

Auf diese Weise kann das Lager 11 optimal zur Lagerung der unterschiedlichsten Stückgüter 1 genutzt werden. Mit der Erfassungseinrichtung 4 wird das Stückgut 1 identifiziert. Anhand der Vermessung des Stückgutes 1 in der Vermessungseinrichtung 9 berechnet der Rechner unter Berücksichtigung des freien Lagerplatzes im Lager 11, in welcher Lage das Stückgut 1 in der jeweiligen Schublade 12 untergebracht werden kann, um eine optimale Flächenausnutzung zu ermöglichen. Dementsprechend wird die Greifeinrichtung des Portalroboters 13 gesteuert, damit sie das Stückgut 1 von der Transporteinrichtung 2 abnehmen und in der richtigen Lage an der ausgewählten Lagerstelle ablegen kann. Als Ordnungsmaßstab dient somit nicht mehr beispielsweise der Produktname oder die Produktart, sondem ausschließlich die Packungsgröße. Dadurch kann der Lagerraum erheblich verringert werden im Vergleich zur herkömmlichen Lagerung solcher Produkte, die ohne Rücksicht auf die Packungsgröße lediglich alphabetisch nach dem Produktnamen oder nach der Zusammengehörigkeit von Produktart bzw. Produktsorte gelagert werden. Da die Lagerung vollständig rechnergesteuert und vollautomatisch erfolgt, ist jederzeit sichergestellt, daß der Apotheker das von ihm gewünschte Produkt zuverlässig erhält. Er ist an seiner Verkaufstheke mit einer entsprechenden Computereinheit ausgestattet, die an den Rechner direkt oder beispielsweise ferngesteuert angeschlossen ist. Über sie gibt der Apotheker die entsprechenden Befehle oder Namen ein, damit ein entsprechendes Produkt aus dem Lager 11 geholt wird. Der zentrale Rechner gibt dann ein entsprechendes Signal an die Greifeinrichtung sowie an die Steuerung der einzelnen Schubladen 12, so daß diese ausfahren und die Greifeinrichtung das angeforderte Stückgut 1 ergreifen und entnehmen kann.

Es ist auch möglich, den Abstand zwischen den Ablagen zu verändern, so daß eine Anpassung an das größte Höhenmaß des Stückgutes 1 möglich ist. Die Ablageflächen können hierzu vertikal verschiebbar angeordnet sein.

Damit beim Verschieben der Schubladen 12 das darin gelagerte Stückgut nicht verrutscht, sind sie mit einer Rutschsicherung versehen. Sie kann eine rutschfeste Oberseite des Bodens 21 der Schublade sein. Im dargestellten Ausführungsbeispiel werden die Stückgüter mittels Unterdruck gegen Verrutschen gesichert. Hierzu ist der Boden 21 (Fig. 3) der jeweiligen Schublade 12 mit Öffnungen 22 versehen, durch die Luft angesaugt werden kann. Die Verpakkungen werden dadurch gegen den Schubladenboden 21 mittels Unterdruck gezogen, so daß sie beim Ein- und Ausfahren der Schublade 12 nicht verrutschen. Hierfür reicht ein verhältnismäßig geringer Unterdruck aus, der in herkömmlicher Weise mit Pumpen und dergleichen erzeugt werden kann. Im Bereich unterhalb des Bodens 21 ist die Schublade 12 mit einer entsprechenden Saugkammer versehen, aus der zur Erzeugung des Unterdruckes in bekannter Weise Luft abgesaugt wird.

Damit die vom Apotheker gewünschten Präparate vom Lager 11 zur Verkaufsstelle transportiert werden, ist eine (nicht dargestellte) Warentransporteinrichtung vorgesehen, die das ausgewählte Produkt vorteilhaft unmittelbar bis an die Verkaufstheke heranfördert. Diese Warentransporteinrichtung hat beispielsweise ein Förderband, auf dem der Portalroboter 13 das jeweilige Stückgut 1 ablegt. Die Breite dieses Förderbandes ist auf die kürzeste Seitenlänge des Stückgutes 1 mit der größten kürzesten Seite abgestimmt. Vorteilhaft ist das Förderband U-förmig ausgebildet, so daß das Stückgut nicht vom Förderband fallen kann.

Das Förderband ist vorteilhaft in einem Rohr untergebracht, das zweckmäßig im Deckenbereich verläuft. Dieses Rohr kann oberhalb einer abgehängten Decke angeordnet sein, so daß es von außen nicht sichtbar ist. Dieses Transportrohr wird so geführt, daß es vom Arbeitsbereich des Portalroboters 13 bis zu einem Fallrohr 23 verläuft (Fig. 4), das sich beispielsweise bis zur Verkaufstheke erstreckt. Am Eintritt in das Fallrohr oder noch innerhalb des Transportrohres ist vorteilhaft eine Lichtschranke oder dergleichen eingebaut, mit der die Ankunft einer Packung festgestellt werden kann. Dann kann ein entsprechendes Signal im Verkaufsraum ausgelöst werden. Anstelle des beschriebenen Förderbandes können beispielsweise auf Schienen oder auf andere Weise geführte, miniaturisierte fahrerlose Transportsysteme eingesetzt werden.

Damit das Stückgut 1 nicht ungebremst durch das Fallrohr 23 nach unten fällt, ist es mit einer Bremseinrichtung versehen. Das Fallrohr 23 hat vorzugsweise kreisförmigen Querschnitt. Zur Bildung der Bremseinrichtung sind in das Fallrohr 23 zwei dehnbare Trennwände 24 und 25 eingesetzt, die parallel zueinander verlaufen und zwischen sich einen Förderkanal 26 für das Stückgut 1 bilden. Zwischen den Trennwänden 24, 25 und dem Fallrohr 23 werden im Querschnitt segmentförmige Luftkammern 27 und 28 gebildet, in die Luftzuleitungen 29 und 30 münden. Über sie wird dosiert Luft in die Kammern 27, 28 geblasen, wobei die Trennwände 24, 25 entsprechend dem Luftdruck elastisch gedehnt werden. Das durch den Kanal 26 fallende Stückgut 1 dehnt die Trennwände 24, 25 beim Durchfallen geringfügig gegen den Druck in den Kammern 27, 28 und wird somit gebremst. Der Druck in den Kammern 27, 28 wird so an das durchfallende Stückgut angepaßt, daß es mit einer ausreichenden Geschwindigkeit nach unten fällt.

Die Fallgeschwindigkeit kann sehr einfach beispielsweise durch zwei einander gegenüberliegende, an der Innenwandung des Fallrohres 23 im Förderkanal 26 sitzende Fotosensoren 31, 32 bestimmt werden. Ist die Fallgeschwindigkeit zu hoch, dann wird über die Luftzuleitungen 29, 30 Luft in die Kammern 27, 28 geleitet, wodurch die Trennwände 24, 25 mehr gedehnt werden (gestrichelte Linien in Fig. 4) und der Durchlaßquerschnitt des Kanals 26 verringert wird. Das Stückgut 1 wird auf diese Weise in seiner Fallgeschwindigkeit verringert.

Ist umgekehrt die Fallgeschwindigkeit zu gering, dann wird der Druck in den Kammern 27, 28 entsprechend verringert.

Bei einer anderen (nicht dargestellten) Ausführungsform besteht die Bremseinrichtung aus zwei ineinander liegenden Schläuchen, die vorteilhaft aus einer glatten Folie gebildet sind. Der Innendurchmesser des inneren Schlauches wird an die Größe des Stückgutes 1 angepaßt. In den Ringraum zwischen den beiden Schläuchen wird dosiert Luft geblasen oder abgesaugt. Dadurch läßt sich der Innendurchmesser des inneren Schlauches einfach an die Größe und an das Gewicht des Stückgutes 1 anpassen. Das Stückgut 1 rutscht im inneren Schlauch gebremst nach unten. Der Innendurchmesser des inneren Schlauches ist geringfügig kleiner als die Packungsgröße. Aufgrund des Luftpolsters im Ringraum zwischen den beiden Schläuchen wird beim Hindurchfallen des Stückgutes 1 der innere Schlauch entsprechend geringfügig aufgeweitet. Lichtschranken im Fallrohr können wiederum die Fallgeschwindigkeit des Produktes verfolgen und über den Rechner bedarfsgerecht die Luftbremsung dosieren.

Das Fallrohr kann auch innen mit Klappen versehen sein, die elektromagnetisch geladen werden können. Durch Dosierung des Stroms kann die Durchrutschgeschwindigkeit des Stückgutes 1 bestimmt werden. Diese elektromagnetische Variante erlaubt somit ebenfalls ein gebremstes Fördern des Stückgutes 1 im nach unten sich erstreckenden Fallrohr.

Das Stückgut kann aus dem Fallrohr in eine Aufnahme gefördert werden, aus welcher der Apotheker das Stückgut bequem herausnehmen kann. Es ist aber auch möglich, das Stückgut innerhalb des Fallrohres festzuhalten. Hierzu ist im Fallrohr ein quer zur Achse des Fallrohres bewegliches Klemmstück vorgesehen, das durch Strombeaufschlagung verstellt werden kann. Diesem Klemmstück gegenüber kann ein Widerlager im Fallrohr angeordnet sein. Rutscht das Stückgut 1 im Fallrohr nach unten, dann kann kurz vor dem Klemmstück eine Lichtschranke oder dergleichen vorgesehen sein. Passiert das Stückgut 1 diese Lichtschranke, wird ein Impuls ausgelöst, mit dem der Antrieb des Klemmstückes eingeschaltet wird. Es wird dann in Richtung auf das gegenüberliegende Widerlager verschoben, wodurch das Stückgut 1 zwischen ihm und dem Widerlager festgeklemmt wird. Das Fallrohr kann in Höhe dieser Klemmeinrichtung eine Klappe oder dergleichen aufweisen, so daß das Stückgut entnommen werden kann.

Eine solche Klemmeinrichtung kann aber auch in einem Transportwagen oder dergleichen vorgesehen sein, der sich unterhalb des Fallrohres befindet. Dann kann der Transportwagen unter dem Fallrohr weggefahren werden, so daß sich das Stückgut bequem entnehmen läßt.

Aufgrund der vollautomatischen Lagerung ist es vorteilhaft möglich, die abgelegten Stückgüter 1 umzulagern, um eine Optimierung der Lagerstellen zu gewährleisten. Eine solche Umlagerung wird zweckmäßig während der Ruhepausen in der Apotheke, bsp. in der Mittagspause oder über Nacht, durchgeführt, so daß der Apothekenbetrieb nicht gestört wird.

Wird bei der Vermessung des Stückgutes 1 festgestellt, daß es in seinen Abmessungen zu groß ist und darum nicht in die im Lager 11 vorgesehenen Schubladen gelegt werden kann, wird ein entsprechendes Signal an den Rechner geschickt, der dann seinerseits ein Signal an das Handhabungsgerät 13 oder ein anderes Handhabungsgerät sendet, um das zu große Stückgut 1 auszusortieren. Auch ist es möglich, insbesondere wenn die Vermessung des Stückgutes 1 während des Transportes erfolgt, im Transportweg eine Sortierweiche vorzusehen, mittels der das zu große Stückgut 1 einfach aussortiert werden kann.

Mit der beschriebenen Einrichtung ist auch eine Wareneingangskontrolle sehr einfach möglich. Die ankommenden Stückgüter werden in der beschriebenen Weise auf die Transporteinrichtung 2 geschüttet und mittels der Vereinzelungseinheit 3 vereinzelt. Dann durchläuft jedes einzelne Stückgut die Erfassungseinrichtung 4, in der jedes einzelne Stückgut zuverlässig erfaßt wird. Der Rechner kann dann die übermittelten Werte mit einer Wareneingangsliste vergleichen, so daß mühelos eine Wareneingangskontrolle gewährleistet ist.

Gleichzeitig ist es möglich, das sogenannte "first in - first out"-Verfahren zu gewährleisten. Damit wird das älteste gelagerte bzw. eingegangene Stückgut eines Artikels auch als erstes entnommen.

In der Erfassungseinrichtung 4 kann auch das an der Verpackung des Stückgutes 1 vorhandene Verfallsdatum erfaßt und dem Rechner mitgeteilt werden. Dieses Verfallsdatum kann dann als Kriterium für die Herausgabe des Stückgutes 1 aus dem Lager 11 dienen. Wird ein Stückgut 1 vom Apotheker angefordert, das mehrfach im Regal 11 vorhanden ist, dann weist der Rechner das Handhabungsgerät 13 an, das vom Verfallsdatum her älteste Stückgut 1 dem Lager 11 zu entnehmen und dem Apotheker in der beschriebenen Weise zuzuführen. Dem Rechner ist die Lagerstelle aufgrund der beschriebenen Erfassung bekannt, so daß der Rechner auch darüber informiert ist, welches Verfallsdatum das jeweilige Produkt hat. Somit hat der Apotheker die Gewähr dafür, daß das jeweils älteste Stückgut einer Sorte dem Lager 11 entnommen wird. Dadurch wird auch gewährleistet, daß das Verfallsdatum nicht oder nur in wenigen Fällen, wenn beispielsweise das Produkt nicht vom Kunden gekauft wird, verfällt. Ebenso ist es möglich, alle vom Verfall bedrohten Stückgüter nach Bedarf oder automatisch auszusortieren.

Schließlich ist in der beschriebenen Weise ohne weiteres eine vollautomatische Inventur möglich, da aus dem Rechner jederzeit der augenblickliche Warenbestand abgerufen werden kann. Darum entfällt für den Apotheker der sehr zeitaufwendige Inventurvorgang; er kann nunmehr automatisch vom Rechner vorgenommen werden. Er kann so programmiert sein, daß er eine entsprechende Inventurliste mit Angabe der jeweiligen Präparate, der Zahl der Präparate und dgl. ausdruckt.

Anstelle der beschriebenen rechnergestützten automatischen Vermessung und Identifizierung, welche die bevorzugte Vorgehensweise ist, ist es aber auch möglich, die Stückgüter 1 von Hand über eine optische Lese- und Vermessungseinrichtung zu führen. Diese Einrichtungen geben dann entsprechende Signale an den Rechner. Die Bedienungsperson legt anschließend die Stückgüter beispielsweise auf eine Transporteinrichtung, von der sie in der beschriebenen Weise von einem Handhabungsgerät abgenommen und eingelagert werden. Auch können die Stückgüter von Hand eingelagert werden, wie beschrieben worden ist.

Die Stückgüter 1 können aber auch von Hand vermessen und/oder identifiziert werden. Die ermittelten Daten werden dann über eine Tastatur in den Rechner gegeben. Er ermittelt die für das jeweilige Stückgut optimale Lagerstelle. Die Ablage des Stückgutes erfolgt, wie zuvor im einzelnen beschrieben.

Es ist auch eine Ausführungsform möglich, bei der die Stückgüter 1 nicht mittels des Handhabungsgerätes, sondern manuell eingelagert oder herausgenommen werden. Damit die Bedienungsperson die vom Rechner ermittelte Lagerstelle erkennt, sind verschiedene Einrichtungen möglich. So kann der Rechner eine Zeigereinrichtung steuern, die mit einem Lichtzeiger arbeitet, der die gewählte Lagerstelle anleuchtet.

Die Schubladen oder andere Ablagen können mit Leuchtanzeigen, beispielsweise LEDs, ausgestattet sein, die vom Rechner angesteuert werden. So kann jede Schublade an ihrer Blende mit einer Leuchtanzeige versehen sein, so daß die Bedienungsperson am Aufleuchten der entsprechenden Leuchtanzeige einfach erkennen kann, welche Schublade zum Ablegen des jeweiligen Stückgutes 1 vorgesehen ist. Um nun in der Schublade die entsprechende Lagerstelle zu kennzeichnen, kann der Schubladenboden mit in zueinander senkrecht liegenden Reihen von Leuchtanzeigen versehen sein, die in einem geeigneten Rasterabstand voneinander angeordnet sind. Durch Aufleuchten der entsprechenden Anzeigen wird die vom Rechner bestimmte Lagerstelle eindeutig angezeigt.

Es ist aber auch möglich, daß die Lagerstelle in der Schublade nicht durch die Leuchtanzeigen, sondern durch einen Lichtzeiger angegeben wird, der vom Rechner gesteuert wird.

Anstelle der beschriebenen bevorzugten Vereinzelung der Stückgüter 1 mittels der Vereinzelungseinheit 3 können die Stückgüter lediglich auf eine Ablage geschüttet werden. Wird als Lager ein Schubladenregal eingesetzt, dann kann als Ablage eine der Schubladen, vorzugsweise eine unterste Schublade, herangezogen werden. Sie wird vorteilhaft nach hinten ausgefahren, so daß die Stückgüter 1 wahllos in diese Schublade geschüttet werden können. Vorteilhaft werden die Stückgüter in der Schublade noch etwas verteilt. Die Schublade wird anschließend nach vom ausgefahren. Die Greifeinrichtung des Handhabungsgerätes 13 ist mit einer optischen Erfassungseinrichtung versehen, die vorteilhaft eine Kamera ist. Sie ist vorzugsweise beweglich an der Greifeinrichtung angeordnet, so daß sie die in der Schublade befindlichen Stückgüter von mehreren Seiten erfassen kann. Mit einer solchen Erfassungseinrichtung kann das Stückgut vermessen und/oder identifiziert werden. Mit ihr ist es auch möglich, das Verfallsdatum zu lesen. Sollte das Stückgut ungünstig liegen, so daß beispielsweise der Barcode nicht lesbar ist, dann ergreift die Greifeinrichtung das Stückgut und dreht es so weit, daß der Barcode, das Verfallsdatum oder dgl. gelesen werden kann. Anschließend kann dieses Stückgut auf die beschriebene Weise abgelegt werden.

## Patentansprüche

1. Verfahren zur Lagerung von Stückgut (1) an einer Lagerstelle (12) in einem Lager (11) mit in der Höhe begrenzten, unterschiedlich hohen und übereinander angeordneten Lagerstellen (12), bei dem das Stückgut (1) vermessen wird, wobei als Meßgröße die Abmessungen (aₚ) des Stückgutes (1) herangezogen werden,
bei dem das Stückgut (1) identifiziert wird,
bei dem die Abmessungen (aₚ) als Signal einem Rechner zugeführt werden,
bei dem anhand dieses Signals eine entsprechende Lagerstelle (12) ausgesucht wird, an der das jeweilige Stückgut (1) unter Berücksichtigung der Lagerhöhe unter optimaler Raumausnutzung des Lagers (11) abgelegt wird,
bei dem als Lager (11) ein Regal oder ein Schubladenlager verwendet wird,
bei dem die Stückgüter (1) ausschließlich nebeneinander liegend auf der Lagerfläche der Lagerstelle (12) abgelegt werden,
bei dem die Stückgüter (1) nach der Vermessung und Identifizierung direkt auf der Lagerfläche abgelegt werden,
bei dem die Lage der abgelegten Stückgüter (1) mit dem Rechner erfaßt wird,
und bei dem die Entnahme der Stückgüter (1) aus dem Lager (11) rechnergestützt wird.

2. Verfahren nach Anspruch 1,
**dadurch gekennzeichnet, daß** der Rechner ein Handhabungsgerät (13) steuert, mit dem das Stückgut (1) in der richtigen Lage auf der vom Rechner ausgesuchten Lagerstelle (12) abgelegt wird.

3. Verfahren nach Anspruch 1 oder 2,
**dadurch gekennzeichnet, daß** die kleinste Abmessung (aₚ) des Stückgutes (1) zur Auswahl der kleinstmöglichen Lagerhöhe herangezogen wird,

4. Verfahren nach einem der Ansprüche 1 bis 3,
**dadurch gekennzeichnet, daß** die Stückgüter (1) unsortiert aufgegeben werden.

5. Verfahren nach einem der Ansprüche 1 bis 4,
**dadurch gekennzeichnet, daß** die Stückgüter (1) während oder am Ende ihres Transportes, vorzugsweise mittels eines Barcodes oder durch OCR-Lesung, identifiziert werden.

6. Verfahren nach einem der Ansprüche 1 bis 5,
**dadurch gekennzeichnet, daß** die Vermessung mechanisch und/oder optoelektronisch erfolgt.

7. Verfahren nach einem der Ansprüche 1 bis 5,
**dadurch gekennzeichnet, daß** die Vermessung elektrisch und/oder elektronisch erfolgt.

8. Verfahren nach einem der Ansprüche 1 bis 5,
**dadurch gekennzeichnet, daß** die Vermessung mit Ultraschall erfolgt.

9. Verfahren nach einem der Ansprüche 1 bis 8,
**dadurch gekennzeichnet, daß** die Regalfächer bzw. die Schubladen des Regals bzw. des Schubladenlagers eine Höhe bzw. eine Schubladenblende (20, 20", 20"') haben, welche die Lage des Stückgutes (1) im entsprechenden Regalfach bzw. in der entsprechenden Schublade unter maximaler Flächenausnutzung bestimmt.

## Claims

1. A method of storing goods items (1) at a storage point (12) in a store (11) with storage points (12) of different height which are restricted in height and are arranged one above the other, in which the item (1) is measured, the dimensions **(a**_{**p**}**)** of the item (1) being used as the measuring size;
- in which the item (1) is identified;
- in which the dimensions **(a**_{**p**}**)** are supplied in the form of a signal to a computer;
- in which, with reference to the said signal, an appropriate storage point (12) is selected, at which, taking into consideration the storage height, the respective item (1) is deposited with regard to optimum utilization of the space of the store (11);
- in which the store (11) used is in the form of a shelf or a drawer-type store;
- in which the goods items (1) are stored exclusively adjacent to one another on the storage surface of the storage point (12);
- in which the goods items (1) are deposited directly on the storage surface after the measurement and identification;
- in which the position of the deposited goods items (1) is detected by the computer,
- and in which the removal of the goods items (1) from the store (11) is assisted by the computer.

2. A method according to Claim 1, **characterized in that** the computer controls a handling device (13) by which the item (1) is deposited in the correct position at the storage point (12) selected by the computer.

3. A method according to Claim 1 or 2, **characterized in that** the smallest dimension **(a**_{**p**}**)** of the item (1) is used when selecting the smallest possible storage height.

4. A method according to one of Claims 1 to 3, **characterized in that** the goods items (1) are introduced unsorted.

5. A method according to one of Claims 1 to 4, **characterized in that** the goods items (1) are identified during or at the end of their transportation, preferably by means of a bar code or by optical character recognition.

6. A method according to one of Claims 1 to 5, **characterized in that** the measurement takes place mechanically and/or opto-electronically.

7. A method according to one of Claims 1 to 5, **characterized in that** the measurement takes place electrically and/or electronically.

8. A method according to one of Claims 1 to 5, **characterized in that** the measurement takes place by ultrasound.

9. A method according to one of Claims 1 to 8, **characterized in that** the shelf compartments or the drawers respectively of the shelf or the drawer-type store respectively have a height or a drawer screen (20, 20", 20"') which determines the position of the item (1) in the corresponding shelf compartment or the corresponding drawer with maximum utilization of the surface.

## Revendications

1. Procédé de stockage d'un produit (1) sur un lieu de stockage (12) dans un magasin (11) avec des surfaces de stockage (12) de hauteur limitée, de hauteur différente et superposées, où
le produit (1) fait l'objet d'une mesure,
les dimensions (aₚ) du produit (1) étant prises en compte comme variable mesurée,
où le produit (1) fait l'objet d'une identification,
où les dimensions (aₚ) sont transmises sous forme de signal à un calculateur,
où un lieu de stockage (12) approprié est recherché à l'aide de ce signal, lieu de stockage dans lequel le produit concerné (1) est entreposé selon une utilisation optimale de l'espace du magasin (11) en prenant en compte la hauteur du stockage,
où des rayonnages ou des tiroirs sont employés comme magasin (11),
où les produits (1) sont exclusivement posés côte à côte sur la surface de stockage du lieu de stockage (12),
où les produits (1) sont directement déposés sur la surface de stockage après mesure et identification,
où la position des produits (1) déposés est saisie par le calculateur,
et où l'enlèvement des produits (1) depuis le magasin (11) est assisté par calculateur.

2. Procédé selon la revendication 1,
**caractérisé en ce que** le calculateur pilote un engin de manutention (13), par lequel le produit (1) est déposé dans le bon positionnement sur le lieu de stockage (12) sélectionné par le calculateur.

3. Procédé selon l'une quelconque des revendication 1 ou 2, **caractérisé en ce que** la plus petite dimension (aₚ) du produit (1) est prise en compte pour effectuer le choix de la plus petite hauteur de stockage.

4. Procédé selon l'une quelconque des revendications 1 à 3, **caractérisé en ce que** les produits (1) sont introduits non triés.

5. Procédé selon l'une quelconque des revendications 1 à 4, **caractérisé en ce que** les produits (1) sont identifiés pendant ou au terme de leur transport, préférentiellement par un code barre ou par lecture OCR.

6. Procédé selon l'une quelconque des revendications 1 à 5, **caractérisé en ce que** la mesure est réalisée par voie mécanique et/ou optoélectronique.

7. Procédé selon l'une quelconque des revendications 1 à 5, **caractérisé en ce que** la mesure est réalisée par voie électrique et/ou électronique.

8. Procédé selon l'une quelconque des revendications 1 à 5, **caractérisé en ce que** la mesure est réalisée à l'aide d'ultrasons.

9. Procédé selon l'une quelconque des revendications 1 à 8, **caractérisé en ce que** les rayonnages, respectivement les tiroirs du rayonnage ou du système de stockage par tiroirs ont une hauteur, respectivement une façade de tiroir (20, 20", 20"') qui définit le positionnement du produit (1) sur l'étagère ou dans le tiroir, dans le but d'une utilisation maximale de la surface.
